## Europäisches Patentamt

## European Patent Office

## Office européen des brevets

(19)

(11) Veröffentlichungsnummer: **0 127 057**
**B1**

# EUROPÄISCHE PATENTSCHRIFT

(12)

(45) Veröffentlichungstag der Patentschrift:
13.08.86

(21) Anmeldenummer: **84105474.5**

(22) Anmeldetag: **14.05.84**

(51) Int. Cl.⁴: **C 08 L 25/12** //
(C08L25/12, 71:02, C08K5:05)

(54) **Thermoplastische Formmassen.**

(30) Priorität: **20.05.83 DE 3318453**

(43) Veröffentlichungstag der Anmeldung:
**05.12.84 Patentblatt 84/49**

(45) Bekanntmachung des Hinweises auf die Patenterteilung:
**13.08.86 Patentblatt 86/33**

(84) Benannte Vertragsstaaten:
**BE DE FR GB NL**

(56) Entgegenhaltungen:
**DE-A-2 916 668**
**GB-A-1 166 223**

(73) Patentinhaber: **BASF Aktiengesellschaft, Carl-Bosch- Strasse 38, D-6700 Ludwigshafen (DE)**

(72) Erfinder: **Hambrecht, Juergen, Dr., Werderstrasse 30, D-6900 Heidelberg (DE)**
Erfinder: **Jung, Rudolf, H., Dr., Wachenheimer Strasse 6 D, D-6520 Worms 1 (DE)**
Erfinder: **Lindenschmidt, Gerhard, Dr., Buchenweg 11, D-6906 Leimen (DE)**
Erfinder: **Echte, Adolf, Dr., Leuschnerstrasse 42, D-6700 Ludwigshafen (DE)**
Erfinder: **Priebe, Edmund, Dr., Bensheimer Ring 7 A, D-6710 Frankenthal (DE)**

## 0 127 057

**Beschreibung**

Die Erfindung betrifft Styrol-Acrylnitril-Copolymerisate enthaltende thermoplastische Formassen, die eine lineares Dreiblockcopolymeres X-Y-X, mit einem mittelständigen Polypropylenoxidblock Y und zwei enständigen Ethylenoxidblöcken X enthalten.

Zum Stand der Technik nennen wir:

(1) DE-PS 20 61 216
(2) DE-PS 12 20 603
(3) US-PS 3 624 186
(4) GB-PS 1 166 223 und
(5) DE-OS 29 16 668.

In (1) and (2) wird der Einsatz von fettsauren Salzen, insbesondere der Salze der Stearinsäure, bei der Herstellung und Verarbeitung von thermoplastischen Polymeren beschrieben. Diese Salz sollen als Entformungsmittel, Antiblockmittel oder als Antiagglomerationsmittel dienen. Auch sollen sie eine Stabilisierung gegen Verfärbung beim Erwärmen von Styrol-Acrylnitril-Copolymerisate bewirken und, wie in (1) beschrieben, in Kombination mit Organosiliciumverbindungen zur Schlagzähigkeitsverbesserung der thermoplastichen Formmassen beitragen. Die Fettsäuren werden dabei in Mengen von 0,05 bis 3 Gew.% eingesetzt.

Aus (3) ist bekannt, daß Stearate von Hydroxylendgruppen tragenden Polybutadienen das Verarbeitungsverhalten von Styrol-Acrylnitril-Copolymerisate enthaltenden thermoplastischen Formmassen verbessern. Insbesondere wird das Fließverhalten verbessert, ohne daß dabei ein Ausschwitzen der Hilfsstoffe in Kauf zu nehmen ist.

In dem Handbuch "Kunststoff-Additive" von R. Gächter und H. Müller, Hanser-Verlag, München (1979), wird ab Seite 229 über verschiedene Verarbeitungshilfsmittel für thermoplastische Formmassen berichtet. Dabei werden als Gleitmittel u.a. auch aliphatische Gleitmittel, wie Cetylalkohol und Stearylalkohol, genannt. Es hat sich jedoch gezeigt, daß diese Alkohole in größeren Mengen zum Ausschwitzen bei der Verarbeitung neigen und deshalb die Verarbeitungscyclen empfindlich stören. In (4) wird außerdem der Einsatz solcher Fettalkohole zur Stabilisierung von SAN-Suspensionspolymerisate gegen Hitze beschrieben.

Aus (5) ist die Verwendung von Ethylenoxid-/Propylenoxid-Dreiblockcopolymeren für die Verbesserung des Verarbeitungsverhaltens von Styrol-Acrylnitril-Copolymerisation beschrieben, ohne daß dadurch die mechanischen Eigenschaften wesentlich vermindert werden. Insbesondere soll durch Zusatz der Ethylenoxid-/Propylenoxid-Dreiblockcopolymeren die Verarbeitungsbreite erweitert werden, was heißt, daß der Spritzdruck beim Spritzguß in weitem Rahmen variiert werden kann, ohne daß Formteile mit Fehlern erhalten werden. Bei den laufend steigenden Ansprüchen in der Spritzgußverarbeitung, insbesondere hinsichtlich der Verarbeitungsgeschwindigkeit und der geometrisch komplizierten Formteile, hat es sich jedoch gezeigt, daß neben der Verarbeitungsbreite auch die Entformungsbreite eine wesentliche Rolle spielt. So hat sich in der Praxis mehrfach ergeben, daß bei sehr komplizierten Formteilen, die als Folge ihrer geometrischen Form sehr fest auf dem Werkzeugkern sitzen können, diese Zusätze nicht ausreichen, um beim Abstreifen des Formteils vom Werkzeugkern eine schadensfreie Entformung zu erreichen.

Aufgabe der vorliegenden Erfindung war es deshalb, mit Styrol-Acrylnitril-Copolymerisaten enthaltenden thermoplastischen Formmassen vertägliche Hilfsstoffe zu suchen, die das Verarbeitungsverhalten dieser Formmassen, d.h. die Verarbeitungsbreite und das Entformungsverhalten wesentlich verbessern, ohne daß dadurch die mechanischen, optischen, chemischen und elektrischen Eigenschaften beeinträchtigt werden.

Diese Aufgabe wird erfindungsgemäß dadurch gelöst, daß den Styrol-Acrylnitril-Copolymerisate enthaltenden thermoplastichen Formmassen Hilfsstoffe gemäß Anspruch 1 der vorliegenden Erfindung hinzugegeben werden.

Aus den unter (1) bis (4) zitierten Schriften konnte der Fachmann nicht entnehmen, daß die beschriebenen Hilfsmittel, wie Fettalkohole und Ethylenoxid-/Propylenoxid-Dreiblockcopolymere, geeignet sind, das Verarbeitungsverhalten in der gewünschten Weise positiv zu beeinflussen, d.h. das Entfernungsverhalten bei der Form-Öffnung und beim Abstoßen der Formteile vom Kern zu verbessern ohne dabei andere Eigenschaften der Formmasse zu verschlechtern.

So ist aus (1) bekannt, fettsaure Metallseifen in Mengen von 0,1 bis 3 Gew.% und in Kombination mit Organosiliciumverbindungen zur Verbesserung der Schlagzähigkeit von ABS-Polymerisation einzusetzen. Die Lehre von (2) zeigt auf, daß mit fettsauren Metallsalzen in Mengen von 0,05 bis 0,075 Gew.% Styrol-Acrylnitril-Copolymerisate gegen Verfärbungen bie thermischer Belastung geschützt werden können. Aus (3) kann entnommen werden, daß mit Hilfe der Stearate der OH-Endgruppen enthaltenden Polybutadiene das Fließverhalten von SAN-Copolymerisaten verbessert werden kann. Auf die Verarbeitungsbreite und das Entformungsverhalten wird in dieser Schrift nicht eingegangen, wohl aber gezeigt, daß mit Hilfe der polymeren Stearate ein Ausschwitzen des Hilfsmittels bei der Verarbeitung verhindert wird. Aus (4) geht hervor, daß Fettalkohole, wie Cetyl- und Stearylalkohole, die Hitzebeständigkeit von SAN-Suspensionspolymerisaten verbessern. Auf das Verarbeitungsverhalten an sich wird an

2

keiner Stelle näher eingegangen. Diese geschieht jedoch in den bereits erwähnten Handbüchern über Kunststoff-Additive: Fettalkohole sind danach als Gleitmittel bekannt. Wie in den Vergleichsversuchen jedoch noch gezeigt werden wird, wird das Verarbeitungsverhalten insbesondere geometrisch komplizierter Formteile durch den Gleiteffekt nicht verbessert. Vielmehr bringen die zumeist angewendeten $C_{16}$—$C_{18}$-Fettalkohole den zusätzlichen Nachteil des Ausschwitzens und damit der Formbelagbildung, die das Verarbeitungsverhalten empfindlich stört. Aus (5) ist schließlich bekannt, daß Ethylenoxid-Propylenoxid-Dreiblockcopolymere einer ganz bestimmten Zusammensetzung und Molekülgröße das Verarbeitungsverhalten, insbesondere die Verarbeitungsbreite von SAN-Copolymerisaten, verbessern. Es wird jedoch in dieser Schrift nicht auf das Entformungsverhalten, insbesondere auf das Abstoßen der Formteile vom Werkzeugkern, eingegangen.

Es war daher auch für den Fachmann überraschend, daß die erfindungsgemäß auzuwendende Kombination der Komponenten B+C eine Verbesserung der Verarbeitungsbreite und eine außergewöhnliche, aus der Wirkung der Einzelkomponenten nicht absehbare Verbesserung des Entformungsverhaltens erbringt, ohne daß dabei die mechanischen, optischen, chemischen und elektrischen Eigenschaften der SAN-Copolymerisate beeinträchtigt werden. Die Anwendung der erfindungsgemäßen Kombination der Komponenten B+C in den angegebenen Mengen hat zur Folge, daß völlig fehlerfreie, wasserklare und farblose Formteile erhalten werden, die optimale mechanisme Eigenschaften aufweisen.

Die Erfindung betrifft demgemäß eine thermoplastische Formmasse, enthaltend
A mindestens ein Styrol-Acrynitrilcopolymerisat, sowie
B 0,1 bis 2 Gew.%, bezogen auf A+B+C, mindestens ein lineares Dreiblockcopolymerisat, das einen mittelständigen, im wesentlichen aus Propylenoxideinheiten aufgebauten Block und außerdem an jedem der beiden Enden mindestens je einen, im wesentlichen aus Ethylenoxideinheiten aufgebauten Block enthält. Die Formmasse ist dadurch gekennzeichnet, daß sie zusätzlich als Komponente C mindestens einen Fettalkohol mit 16 bis 32 C-Atomen, in einem Anteil von 0,005 bis 0,5 Gew.%, bezogen auf A+B+C, enthält.

Gegenüber herkömmlichen, niedermolekularen inneren Schmiermitteln, wie niedermolekularen Fettalkoholen alleine und Mineralölen, zeigt die erfindungsgemäß anzuwendende Kombination von Komponente B+C den Vorteil, daß sie nicht ausschwitzt und verglichen mit Hilfsstoffen, die für die Erhöhung der Schlagzähigkeit, z.B. in (1) eingesetzt werden, in wesentlich geringeren Mengen anwendbar ist, so daß die optischen Eigenschaften nicht nachteilig beeinflußt werden. Gegenüber dem Einsatz der Komponente B, dem Dreiblockcopolymeren aus Ethylenoxid und Propylenoxid, alleine hat die erfindungsgemäße Kombination den Vorteil, daß nicht nur die Verarbeitungsbreite, sondern auch das Entformungsverhalten in allen Phasen des Entformungsvorganges in überraschender, außergewöhnlicher Weise verbessert wird (s. Tabelle).

Unter Verarbeitungsbreite ist der Druckbereich zu verstehen, in dem die Formteile keine Beanstandungen aufweisen. Der Bereich wird bei tiefem Spritzdruck durch den Spritzdruck begrenzt, bei dem die Formteile keine Einfallstellen mehr aufweisen. Die obere Grenze ergibt sich aus dem Spritzdruck, bei dem die Formteile gerade noch entformt werden, können. Oberhalb dieser Grenze wird die Form überfüllt. Je größer dieser Bereich ist, umso besser, d.h. mit umso geringeren Schwierigkeiten läßt sich ein Polymerisat verarbeiten. Eine hohe Verarbeitungsbreite ist erwünscht, um bei Druckschwankungen oder Schwankungen der Materialeigenschaften (Inhomogenitäten) die Ausfallrate an Spritzgußformlingen möglichst niedrig halten zu können.

Unter dem Entformungsverhalten in den verschiedenen Phasen des Entformungsvorganges verstehen wir das Verhalten der Formteile beim Abstreifen der Formteile vom Werkzeugkern. Ein Maß für das Verhalten der SAN-Copolymerisate in diesen Entformungsvorgängen ist die Entformungsbreite. Unter Entformungsbreite ist die Differenz zwischen dem Mindestensfülldruck, d.h. dem Druck, bei dem das Formteil gerade ausgefüllt wird, und dem Nachdruck, bei dem beim Abstreifen von Werkzeugkern an 50% der Formmteil Schäden, wie Risse, auftreten, verstanden. Eine nähere Beschreibung der Versuchsdurchführung wird in den Beispielen gegeben.

Nachstehend wird der Aufbau der Komponenten der erfindungsgemäßen Formmasse, deren Herstellung und die Herstellung der Formmasse beschrieben.

Die Formmasse enthält im wesentlichen die Komponenten A, B und C, wobei die Komponente B 0,1 bis 2 Gew.%, vorzugsweise 0,5 bis 1,5 Gew.% und die Komponente C 0,05 bis 0,5 Gew.%, vorzugsweise 0,07 bis 0,35 Gew.%, ganz besonders bevorzugt 0,1 bis 0,3 Gew.%, jeweils bezogen auf A+B+C, ausmacht. Die Formmasse besteht vorzugsweise aus den Komponenten in den genannten Anteilen.

Komponente A

Für die erfindungsgemäßen Formmassen werden insbesondere kautschukfreie Sttrol-Acrylnitril-Copolymerisate angewendet; diese bestehen im wesentlichen aus Copolymerisaten, die 20 bis 35 Gew.% Acrylnitril und 80 bis 65 Gew.% Styrol und/oder alkylsubstituierte Styrole mit 1 bis 4 C-Atomen im Alkylrest enthalten. Der Styrolbestandteil wird, insbesondere um die Wärmeformständigkeit zu verbessern, ganz oder teilweise durch p-Methylstyrol oder α-Methylstyrol ersetzt. Styrol-Acrylnitrilcopolymerisate sind im Handel erhältlich und können z.B. nach der Lehre der DE-AS 10 01 001 bzw. DE-PS 10 03 436 hergestellt werden. Der Molekulargewichtsbereich $\bar{M}_w$ der Copolymerisate kann $7.10^4$ bis $4.10^5$ (Gewichtsmittel $\bar{M}_w$ aus Lichtstreuung) betragen.

3

Komponente B

Als Komponente B der erfindungsgemäßen Formmassen kommen lineare Dreiblockcopolymerisate in Betracht. Es werden bevorzugt lineare Dreiblockcopolymerisate X-Y-X in Mengen von 0,1 bis 2,0 Gew.%, bevorzugt in Mengen von 0,3 bis 1,5 Gew.%, bezogen auf die Komponenten A, B und C der Formmasse, angewendet (X=Ethylenoxid-, Y=Propylenoxidblock). In den Grenzen von 0,3 bis 1,1 Gew.% entfalten diese Bestandteile ihre volle Wirksamkeit in Bezug auf die Verarbeitungseigenschaften der Styrol-Acrylnitrilcopolymerisate und beeinträchtigen die Mechanik des Copolymeren praktisch nicht. Bei höheren Anteilen, beginnend ab etwa 1,5 Gew.%, nimmt die Verarbeitungsbreite ab; bei Mengen von unter 0,1 Gew.% nimmt ebenfalls die Verarbeitungsbreite ab. Dasselbe gilt in etwa, wenn das Molekulargewicht des mittelständigen Propylenoxidblockes Werte oberhalb von 3000 annimmt.

Die Herstellung der linearen Dreiblockcopolymerisate erfolgt in an sich bekannter Weise (vgl. N. Schönfeldt, Grenzflächenaktive Ethylenoxid-Addukte, Wissenschaftliche Verlagsgesellschaft mbH. Stuttgart, 1976, S. 53) durch Polymerisation, wobei zunächst ein mittelständiger Polypropylenoxidblock Y mit dem Molekulargewichtsbereich (Zahlenmittel des mittleren Molekulargewichts) von 700 bis 3000, insbesondere von 900 bis 2000 hergestellt wird, an dessen beiden Enden bevorzugt je ein Block aus Ethylenoxid angelagert wird. Unter dem Molekulargewicht des Dreiblockes X-Y-X und der Blockbestandteile X und Y sollen die mittleren Molekulargewicht [Zahlenmittel $\bar{M}_n$ bestimmt z.B. aus der OH-Zahl (DIN 53 240)] verstanden werden.

Es ist bevorzugt, lineare Dreiblockcopolymerisate, die im wesentlichen oder vollständig aus Homopolymerisatblöcken aufgebaut sind, zu verwenden. Der Anteil der beiden endständigen aus Ethylenoxid aufgebauten Blockcopolymerisate X an Dreiblockcopolymerisat soll 5 bis 20 Gew.%, vorzugsweise 10 bis 15 Gew.% und der des mittelständigen Propylenoxidblocks Y 95 bis 80 Gew.%, vorzugsweise 90 bis 85 Gew.%, jeweils bezogen auf das Blockcopolymerisat X-Y-X, betragen.

Die mittleren Molekulargewicht (Zahlenmittel) der Summe der beiden endständigen Polyethylenoxidblöcke betragen 140 bis 1000, insbesondere 150 bis 800. Dazu trägt vorzugsweise jeder Block etwa die Hälfte bei.

Die mittleren Molekulargewicht des linearen Blockcopolymerisates setzen sich additiv aus denen der beiden Bestandteile zusammen und können somit im Bereich von 840 bis 4000, insbesondere bis 3600 liegen.

Komponente C

Erfindungswesentlich ist der Einsatz von Fettalkoholen, die geradkettig oder verzweigt, gesättigt oder ungesättigt, natürlich oder synthetisch sein können und 16 bis 32 C-Atome umfassen. Typische Beispiele solcher Fettalkohole sind: Cetyl-, Stearyl-, Behenylalkohole, Isohexadecanol, Isoeicosanol, Isohexacosanol, 2-Octyldodecanol, 2-Dodecyloctadecanol sowie Gemische dieser Fettalkohole. Insbesondere beim Einsatz natürlicher Fettalkohole werden die bekannten Gemische aus $C_{16}$-$C_{22}$-Alkanolen verwendet. Ganz besonders bevorzugt eingesetzt werden solche natürlichen Gemische des Stearyl- und Behenylalkohols sowie verzweigte Fettalkohole wie Isoeicosanol und 2-Octyldodecanol.

Zusatzstoffe D

Gegebenenfalls können die erfindungsgemäßen Formmassen noch übliche Zusatzstoffe enthalten. Übliche Zusätze sind z.B. Hilfsmittel, Farbstoffe, Stabilisatoren, organische und anorganische Pigmente, Flammschutzmittel sowie Füllstoffe. Die Wirkung der Verarbeitungshilfstmittel ist von diesen Zusätzen unabhängig.

Die unter D genannten Zusatzstoffe werden in den dem Fachmann bekannten wirksamen Mengen angewendet; sie können zusammen mit den Komponenten B und C in die Komponente A der Formmasse eingearbeitet werden.

Die Einarbeitung der Bestandteile B, C und gegebenenfalls von D in die Copolymerisate A kann auf allen dem Fachmann bekannten Wegen durchgeführt werden. Insbesondere hat sich das Vermischen der Bestandteile A, B, C und D als geeignet erwiesen. Es ist aber auch möglich, jede der Komponenten B, C und D einzeln mit dem Copolymerisat A zu vermischen oder auf dessen Oberfläche aufzubringen. Als günstig hat sich auch die Polymerisation von A in Gegenwart der Komponenten B+C und der Zusatzstoffe D erwiesen.

Es ist noch darauf hinzuweisen, daß die erfindungsgemäß anzuwendende Kombination von B+C das Verarbeitungsverhalten von Styrol-Acrylnitrilcopolymerisaten verbessern, ohne den Meltindex, d.h. also die Nullviskosität wesentlich zu verändern. Es ist bekannt, daß der Zusatz von Innenschmiermitteln im allgemeinen eine Erhöhung des Meltindexes des zugrundeliegenden Polymerisates bewirkt. Dies ist überraschenderweise hier nicht der Fall.

Für die Durchführung der Versuche wurden folgende Ausgangsstoffe verwendet:

Styrol-acrylnitrilcopolymerisat (Komponente A)

AI: Acrylnitrilgehalt 25 Gew.%, mittleres Molekulargewicht, $\bar{M}_w$=200 000

AII: Acrylnitrilgehalt 35 Gew.%, mittleres Molekulargewicht, $\bar{M}_w$=150 000

4

Dreiblockcopolymeres X-Y-X (Komponente B)

BI: Propylenoxidblock Y 90 Gew.%, Ethylenoxidblöcke X zusammen 10 Gew.%, mittleres Molekulargewicht, $\bar{M}_n$=1100, mittleres Molekulargewicht des Y-Blocks 950

BII: Propylenoxidblock Y 90 Gew.%, Ethylenoxidblöcke X zusammen 10 Gew.%, mittleres Molekulargewicht, $\bar{M}_n$=2000, mittleres Molekulargewicht des Y-Blocks 1750.

Fettalkohole (Komponente C)

CI: Octadecylalkohol (99%ig)

CII: 2-Octyldodecanol (99%ig)

CIII: Gemisch aus folgenden Fettalkoholen:
$C_{16}$-Alkohol 5 %; $C_{18}$-Alkohol 82 %, $C_{20}$-Alkohol 9 %, $C_{22}$-Alkohol 4 %

CIV: Gemisch aus folgenden Fettalkoholen:
$C_{18}$-Alkohol 10 %; $C_{20}$-Alkohol 61 %; $C_{22}$-Alkohol 27 %, $C_{24}$-Alkohol 1%

Die Erfindung wird anhand der nachstehenden Beispiele und Vergleichsversuche näher erläutert. Alle in den Beispielen genannten Teile und Prozente beziehen sich, wenn nichts anderes vermerkt ist, auf das Gewicht.

Beispiele und Vergleichsversuche

Die Komponenten A, B und C werden in den in der Tabelle, Spalte 2, genannten Mengen auf einem Fluidmischer vorgemischt und anschließend in einem Extruder bei 240 bis 260°C abgemischt.

Prüfungen:

Die Versuche zur Bestimmung der Verarbeitungsbreite wurden entsprechend den Versuchen in (4) auf einer Schneckenspritzgußmaschine Krausse-Maffei Typ KM 265—1120 durchgeführt. Die Ergebnisse sind in der Tabelle festgehalten. Die Verarbeitungsbreite wurde bei der Verarbeitungstemperatur von 240°C ermittelt. Schäden bei diesem Verarbeitungstest sind Boden- und Angußreißer sowie Schieferflecken und Schieferstücke wie sie in (4) beschrieben sind.

Die Versuche zur Bestimmung des Entformungsverhaltens wurden auf einer Spritzgußmaschine vom Typ Stübbe SKM 76 durchgeführt. Als Spritzgußformteil wurde ein Sortierkastenunterteil mit in 2 Reihen quer gestellten scharfkantig im Steggrund endenden Stegen ausgewählt. Abmessungen der Bodenplatte: 50×130×2 mm; Zahl der quer angeordneten Stege: 20 Stück je Reihe, Steghöhe: 10 mm; Stegdicke im Steggrund: 1,8 mm. Das Formteil ist so ausgebildet, daß die Stege kernseitig liegen und sich damit im Kern fest verankern können. Zwischen jedem zweiten Steg ist ein Abstreifer angeordnet. Die Massetemperatur betrug 240°C, die Formtemperatur 30°C. Ermittelt wurde die Differenz zwischen Midestfülldruck, d.h. dem Druck, bei dem das Formteil gerade gefüllt wurde und dem Nachdruck, bei dem beim Abstreifen des Sortierkastenunterteils vom Werkzeugkern 50% der Formteile Risse aufweisen. Diese Differenz entspricht der in der Tabelle 1 angegebenen Entformungsbreite.

Schließlich wurde auch noch der Formbelag im Spritzgußwerkzeug nach 400 Verarbeitungscyclen im Spritzgußtest zur Bestimmung der Verarbeitungsbreite visuell beurteilt. Note 1 entspricht dabei keinem Formbelag, Note 2 bedeutet schwacher und Note 3 starker Formbelag.

Erläuterungen zur Tabelle:

In Spalte 2 der Tabelle sind die in den erfindungsgemäßen Formmassen enthaltenden Anteile der Komponenten A, B und C aufgeführt. In Spalte 3 ist die Verarbeitungsbreite der erfindungsgemäßen Formmassen, ermittelt bei einer Verarbeitungstemperatur von 240°C, zusammen mit den unter der Rubrik "Bemerkungen" aufgeführten eventuellen Schäden an den erhaltenen Spritzgußformteilen aufgeführt. Die Spalte 4 gibt Auskunft über die bei einer Verarbeitungstemperatur von 240°C ermittelte und vorstehend näher erläuterte Entformungsbreite; in der letzten Spalte schließlich wird der beim Spritzgießen im Spritzgußwerkzeug auftretende Formbelag beurteilt.

Die Ergebnisse der Tabelle verdeutlichen in anschaulicher Weise, die für den Fachmann überraschende und aus der Addition von Einzelmaßnahmen, z.B. der Vergleichsversuche, nicht vorhersehbare außergewöhnliche Verbesserung des Entfernungsverhaltens, bei gleichbleibend gutem Verarbeitungsverhalten, der erfindungsgemäßen Formmassen. So war aus den Ergebnissen der nicht erfindungsgemäßen Versuche 2 und 3 nicht zu erwarten, daß das Entformungsverhalten in einer derart drastischen Weise (vgl. Beispiel 6) verbessert werden würde.

TABELLE

| Beispiele | Komponenten (Gew.%) | | | Verarbeitungsverhalten | | Entfernungs- | Formbelag |
| | A | B | C | Verarbeitungs-breite (bar) | Bemerkungen | breite bar | |
|---|---|---|---|---|---|---|---|
| nicht erfindungsgemäß | | | | | | | |
| 1 | AI (100) | — | — | 65 | Schäden | 0 | 1 |
| 2 | AI (99) | BI (1) | — | 110 | keine Schäden | 10 | 1 |
| 3 | AI (99,5) | — | CI (0,5) | 70 | Schäden | 180 | 3 |
| erfindungsgemäß | | | | | | | |
| 4 | AI (99,2) | BI (0,5) | CI (0,3) | 150 | keine Schäden | 340 | 1 |
| 5 | AI (99,3) | BI (0,5) | CI (0,2) | 150 | keine Schäden | 350 | 1 |
| 6 | AI (99,4) | BI (0,5) | CI (0,1) | 150 | keine Schäden | 350 | 1 |
| 7 | AI (99,5) | BI (0,3) | CI (0,2) | 140 | keine Schäden | 340 | 1 |
| 9 | AII (99,4) | BI (0,5) | CI (0,1) | 160 | keine Schäden | 340 | 1 |
| 10 | AI (99,2) | BII (0,6) | CI (0,2) | 140 | keine Schäden | 330 | 1 |
| 11 | AII (99,4) | BI (0,5) | CII (0,1) | 150 | keine Schäden | 360 | 1 |
| 12 | AII (99,4) | BI (0,5) | CIII (0,1) | 140 | keine Schäden | 340 | 1 |
| 13 | AI (99,4) | BI (0,5) | CIII (0,1) | 150 | keine Schäden | 340 | 1 |
| 14 | AI (99,2) | BII (0,6) | CIV (0,2) | 140 | keine Schäden | 330 | 1 |

**Patentansprüche**

1. Thermoplastische Formmasse, enthaltend

A mindestens ein Styrol-Acrylnitril-Copolymerisat, sowie

B 0,1 bis 2 Gew.%, bezogen auf A+B+C, mindestens ein lineares Dreiblockpolymerisat, das einen mittelständigen, im wesentlichen aus Propylenoxideinheiten aufgebauten Block und außerdem an jedem der beiden Enden mindestens je einen, im wesentlichen aus Ethylenoxideinheiten aufgebauten Block enthält,

dadurch gekennzeichnet, daß die Formmasse zusätzlich als Komponente C mindestens einen Fettalkohol mit 16 bis 32 C-Atomen in einem Anteil von 0,05 bis 0,5 Gew.%, bezogen auf A+B+C enthält.

2. Formmasse nach Anspruch 1, dadurch gekennzeichnet, daß die Komponente C in einem Anteil von 0,07 bis 0,35 Gew.%, bezogen auf A+B+C, enthalten ist.

3. Formmasse nach Anspruch 1, dadurch gekennzeichnet, daß die Fettalkohole geradkettig oder verzweigt, gesättigt oder ungesättigt sind.

4. Formmasse nach Anspruch 1, dadurch gekennzeichnet, daß diese ferner übliche Zusatzstoffe enthält.

5. Verwendung von Formmassen gemäß Anspruch 1 für die Verarbeitung im Spritzguß.

6. Formteile aus Formmassen gemäß Anspruch 1.

**Revendications**

1. Matière à mouler thermoplastique, contenant

A au moins un copolymère de styrène et d'acrylonitrile et

B 0,1 à 2 % en poids par rapport à la somme de A+B+C d'au moins un copolymère linéaire à trois blocs, à savoir un bloc central constitué essentiellement d'unités oxyde de propylène et à chaque extrémité au moins un bloc terminal constitué essentiellement d'unités oxyde d'éthylène,

caractérisée en ce que la matière à mouler contient comme composante C additionnelle au moins un alcool gras en $C_{16}$ à $C_{32}$ en une proportion comprise entre 0,05 et 0,5 % en poids par rapport à la somme de A+B+C.

2. Matière à mouler suivant la revendication 1, caractérisée en ce que la proportion de la composante C est comprise entre 0,07 et 0,35 % en poids par rapport à la somme de A+B+C.

3. Matière à mouler suivant la revendication 1, caractérisée en ce que les alcools gras peuvent être à chaîne droite ou ramifiée et être saturés ou non saturés.

4. Matière à mouler suivant la revendication 1, caractérisée en ce qu'elle contient en outre des additifs usuels.

5. Utilisation de matières à mouler suivant la revendication 1 pour le moulage par injection.

6. Articles façonnés en matières à mouler suivant la revendication 1.

**Claims**

1. A thermoplastic moulding composition containing

(A) at least one styrene/acrylonitrile copolymer, and

(B) from 0.1 to 2% by weight, based on A+B+C, of at least one linear three-block copolymer containing, in the middle position, a block consisting essentially of propylene oxide units and, at each end, a block consisting essentially of ethylene oxide units,

wherein the moulding composition additionally contains, as component (C), at least one fatty alcohol of 16 to 32 carbon atoms in an amount of from 0.05 to 0.5% by weight, based on A+B+C.

2. A moulding composition as claimed in claim 1, wherein component (C) is present in an amount of from 0.07 to 0.35% by weight, based on A+B+C.

3. A moulding composition as claimed in claim 1, wherein the fatty alcohol is linear or branched, and saturated or unsaturated.

4. A moulding composition as claimed in claim 1, which additionally contains conventional additives.

5. The use of a moulding composition as claimed in claim 1 for injection moulding.

6. Moulded parts produced from a moulding composition as claimed in claim 1.